# EUROPEAN PATENT APPLICATION

(11) **EP 4 760 224 A1**
(43) Date of publication of application: **17.06.2026**
(21) Application number: 25221412.7
(22) Date of filing: 08.12.2025
(51) Int. Cl.: G01L 1/20, H01M 10/42, H01M 10/48

(54) **MASTER CELL FOR PRESSURIZED DATA ACQUISITION AND TRAY FOR ACCOMMODATING THE SAME**

(30) Priority: 10.12.2024 KR 20240183121
(71) Applicant: SHL Co., Ltd., Suwon-si, Gyeonggi-do 16643 (KR); Kitronyx Inc., Seoul 08512 (KR)
(72) Inventor: KWAK, Gi Young, 16643 Gyeonggi-do (KR); CHANG, Wook, 08512 Seoul (KR)
(74) Representative: Zacco Sweden AB

(57) **Abstract**

The present invention relates to a master cell for pressurized data acquisition, including a cell body inserted between pressurization panels on behalf of a pressurization target, an electronic pressure mapping film which is installed flat on one side surface of the cell body and outputs distribution of a pressurizing force by the pressurization panel as an electrical signal, a communication unit configured to transmit the electrical signal output from the electronic pressure mapping film as a wireless signal, and a battery, and a tray for accommodating the same.

According to the present invention, it is possible to enable the measurement of the flatness, parallelism, pressurizing force, and even resistance of a pressurization panel that pressurizes a pressurization target and enable the accurate and easy acquisition and provision of pressurized data for the pressurization panel.

## Description

### BACKGROUND OF THE INVENTION

### Field of the Invention

The present invention relates to a master cell for pressurized data acquisition and a tray for accommodating the same, and more specifically, to a master cell for pressurized data acquisition and a tray for accommodating the same, which enables the measurement of the flatness, parallelism, pressurizing force, and even resistance of a pressurization panel that pressurizes a pressurization target and enables the accurate and easy acquisition and provision of pressurized data for the pressurization panel.

### Description of the Related Art

Generally, secondary batteries are rechargeable and capable of large capacity, and representative examples include nickel-cadmium, nickel-metal hydride, and lithium-ion batteries. Among these secondary batteries, some can be manufactured in a flexible pouch type, which provides the advantage of relatively flexible shape.

Such a cell pouch for a secondary battery is configured such that a battery cell is accommodated therein and a polymer pouch exterior surrounds the battery cell, and to this end, the cell pouch for a secondary battery is composed of an electrode, a pouch, and a battery cell. In addition, when an internal structure of the cell pouch for a secondary battery is damaged or destroyed, resulting in a breakdown in insulation, the battery cell cannot maintain a steady-state voltage, resulting in low voltage, swelling of the battery cell, etc.

Accordingly, the cell pouch for a secondary battery needs to be operated in such a manner that defects can be fundamentally eliminated by inspecting potential defects including insulation-line defects, and as the related art, Korean Patent Registration No. 10-1896218, entitled "Simultaneous inspection device for multiple cell pouches for a secondary battery" has been disclosed. The cell pouch for a secondary battery includes a support member installed for support, a movable member installed to face the support member, a plurality of pressurization panels installed in parallel between the support member and the movable member, coupled so that intervals therebetween can be adjusted by forward and backward movement of the movable member, and in which the cell pouch for a secondary battery is inserted into a gap formed therebetween, a guide member that guides the pressurization panels to move in an interval adjustment direction, an electrode module, which is fixed to the pressurization panel so as to be installed in plural between the pressurization panels to move together with the pressurization panels, and is connected to each electrode portion of the cell pouch for a secondary battery positioned in the gap to apply or receive current, and a pressurization driving unit which pressurizes and depressurizes both side surfaces of the cell pouch for a secondary battery between the pressure panels by moving the movable member forward and rearward, in which the electrode module includes a fixed member fixed to one side surface of the pressurization panel, an electrode actuator fixed to the fixed member and having a movable tip which is disposed in the interval adjustment direction and has an adjustable interval, a fixed piece fixed to each of the movable tips, and electrodes which are installed to face each other on the fixed pieces, respectively, and come into surface contact with both side surfaces of the electrode portion of the cell pouch for a secondary battery by the driving of the electrode actuator, and the electrode module is installed in a mounting groove formed in the pressurization panel, a guide hole extending in a width direction of the cell pouch for a secondary battery is formed in the fixed member, and the fixing position in the width direction is changed by a fixing bolt inserted into a desired position in the guide hole and screw-fastened into the mounting groove.

In the related art, since the reliability of the inspection for the cell pouch for a secondary battery is increased only when the pressurizing force applied to the cell pouch for a secondary battery by each pressurization panel is uniform across the entire pressurized surface, pressurized data for the pressurized surface of the pressurization panel is required, and such a need is not limited to the cell pouch for a secondary battery, but can also apply to all devices that apply a pressurizing force to a pressurization target. Accordingly, the above problem is intended to be solved through the project entitled "Development of an integrated production system equipped with a self-diagnostic KIT for an activation process capable of automatic input and discharge for improving secondary battery productivity" (No. 2410002718), which is a part of the "2024 secondary new support program for secondary battery materials and components technology development" of the Korea Evaluation Institute of Industrial Technology under the Ministry of Trade, Industry and Energy.

### Documents of Related Art

[Patent Document] Korean Laid-Open Patent No. 10-2024-0126237, entitled "Apparatus for measuring pressurizing force of pressurizing jig, method of measuring pressurizing force, and inspection system for pressurizing jig' (published on August 20, 2024)

### SUMMARY OF THE INVENTION

The present invention is directed to enabling the measurement of the flatness, parallelism, pressurizing force, and even resistance of a pressurization panel that pressurizes a pressurization target and enabling the accurate and easy acquisition and provision of pressurized data for the pressurization panel, thereby enhancing the reliability of various subsequent operations related to a pressurizing process, such as inspection, measurement, monitoring, manufacturing, etc.

According to an aspect of the present invention, there is provided a master cell for pressurized data acquisition, including a cell body inserted between pressurization panels on behalf of a pressurization target, an electronic pressure mapping film which is installed flat on one side surface of the cell body and outputs distribution of a pressurizing force by the pressurization panel as an electrical signal, a communication unit configured to transmit the electrical signal output from the electronic pressure mapping film as a wireless signal, and a battery configured to provide power necessary for the operation of the electronic pressure mapping film and the communication unit.

The battery may be charged by charging power supplied through charging electrodes provided in the cell body.

The battery may further include a housing having a plate-like structure positioned above the electronic pressure mapping film in the cell body, allowing the communication unit and a controller for operation control to be accommodated therein.

The master cell may further include a pair of measuring electrodes provided to protrude from both ends of the cell body, respectively, and used for resistance measurement.

The master cell may further include grip portions provided to be gripped by grippers on both upper sides of the cell body.

According to another aspect of the present invention, there is provided a master cell tray on which a plurality of master cells for pressurized data acquisition according to an aspect of the present invention are mounted in parallel, including a tray body which is open upward, and a plurality of slots provided in parallel inside the tray body such that the master cells for pressurized data acquisition are vertically mounted, respectively.

The slot may be provided between a plurality of supports disposed to be vertically spaced apart from each other on both sides of a bottom surface inside a tray body, allows measuring electrodes, which protrude from both sides of the cell body, to pass through by anti-detachment portions formed on outer sides of each of the supports while blocking passage of the cell body, and by entrance guide portions formed on both upper sides of the anti-detachment portions to be inclined downward, each of the measuring electrodes is guided to be inserted between the anti-detachment portions.

The master cell tray may further include separation supports configured to support both lower sides of the cell body on the bottom surface inside the tray body, thereby forming an accommodation space between the cell body and the bottom surface, and a router which is installed inside the accommodation space and transmits an electrical signal of the electronic pressure mapping film transmitted through communication with the communication unit to an external signal processing device.

The separation support may be provided with an anti-detachment step so as to be caught by a groove formed to allow the charging electrode, which is directed downward for charging the battery, to be positioned inside the lower end of the cell body.

The master cell tray may further include a probe pin provided for each slot to provide charging power by connecting and supporting each of charging electrodes provided at both lower ends of the cell body for charging the battery.

According to the master cell for pressurized data acquisition and the tray for accommodating the same according to the present invention, it is possible to enable the measurement of the flatness, parallelism, pressurizing force, and even resistance of a pressurization panel that pressurizes a pressurization target and enable the accurate and easy acquisition and provision of pressurized data for the pressurization panel, thereby enhancing the reliability of various subsequent operations related to a pressurizing process, such as inspection, measurement, monitoring, manufacturing, etc.

### BRIEF DESCRIPTION OF THE DRAWINGS

FIG. 1 is a perspective view illustrating a master cell for pressurized data acquisition and a tray for accommodating the same according to one embodiment of the present invention.
FIG. 2 is a perspective view illustrating the master cell for pressurized data acquisition according to the embodiment of the present invention.
FIG. 3 is a rear perspective view illustrating the master cell for pressurized data acquisition according to the embodiment of the present invention.
FIG. 4 is a configuration diagram illustrating the master cell for pressurized data acquisition according to the embodiment of the present invention.
FIG. 5 is a perspective view of a master cell tray according to the embodiment of the present invention.
FIG. 6 is a front cross-sectional view illustrating the master cell for pressurized data acquisition mounted on the master cell tray according to the embodiment of the present invention.
FIG. 7 is a partial plan view illustrating the master cell for pressurized data acquisition mounted on the master cell tray according to the embodiment of the present invention.

### DETAILED DESCRIPTION OF THE INVENTION

Since the present invention may have various embodiments through numerous modifications, specific embodiments will be illustrated in the drawings and described as examples. However, it should be understood that the present invention is not limited to these specific embodiments, but includes all modifications, equivalents, and substitutes that fall within the spirit and scope of the present invention.

Hereinafter, various embodiments of the present invention will be described in detail with reference to the accompanying drawings, and the same or similar components are denoted by the same reference numerals regardless of drawing symbols, and the overlapping descriptions thereof will be omitted.

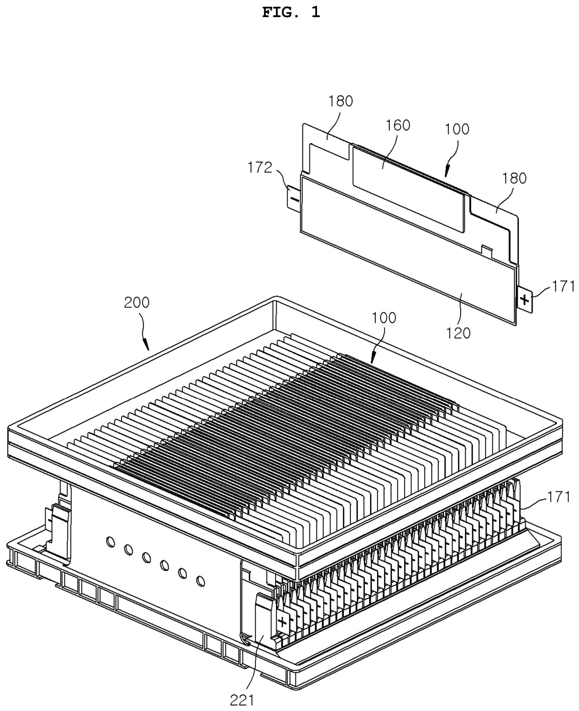

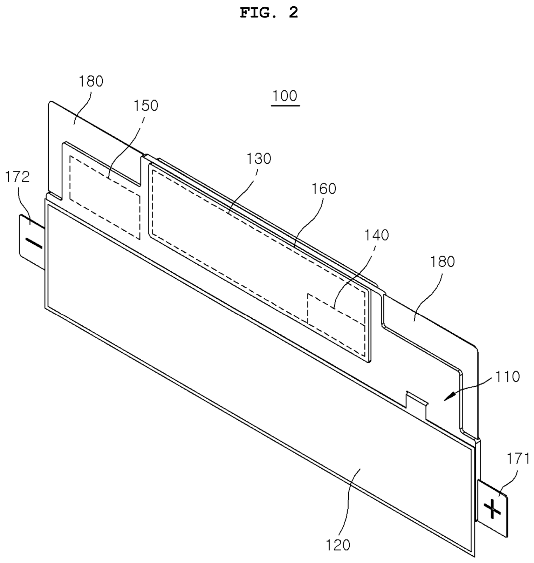

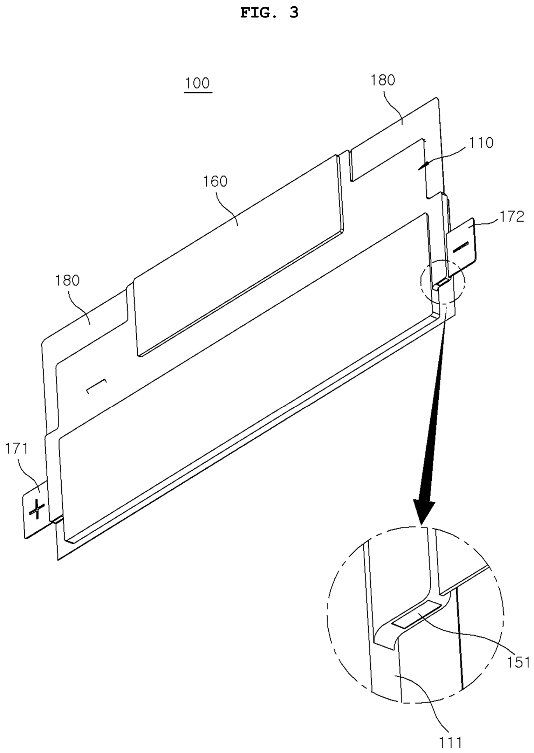

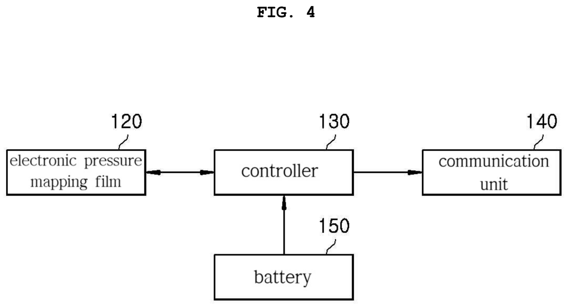

FIG. 1 is a perspective view illustrating a master cell for pressurized data acquisition and a tray for accommodating the same according to one embodiment of the present invention, FIG. 2 is a perspective view illustrating the master cell for pressurized data acquisition according to the embodiment of the present invention, FIG. 3 is a rear perspective view illustrating the master cell for pressurized data acquisition according to the embodiment of the present invention, and FIG. 4 is a configuration diagram illustrating the master cell for pressurized data acquisition according to the embodiment of the present invention.

Referring to FIGS. 1 to 4, a master cell 100 for pressurized data acquisition according to one embodiment of the present invention may include a cell body 110, an electronic pressure mapping film 120, a communication unit 140, and a battery 150.

The cell body 110 is inserted between pressurization panels on behalf of a pressurization target. Here, the pressurization panel may be, for example, a panel for pressurizing a cell pouch for a secondary battery as a pressurization target described in the related art, but is not limited thereto, and for various purposes, such as testing, measurement, manufacturing, etc., the pressurization panel may be a panel for pressurizing one side or both sides of a pressurization target, and in this case, the cell body 110 is loaded into a pressurized position on behalf of the pressurization target so as to be pressurized by the pressurization panel.

The electronic pressure mapping film 120 is installed flat on one side surface of the cell body 110 and thus comes into surface contact with the pressurization target and outputs the distribution of a pressurizing force applied by the pressurization panel as an electrical signal. The electronic pressure mapping film 120 measures pressure applied by multiple pressure sensors two-dimensionally disposed on a flat member, such as a film, a sheet, etc., and outputs an electrical signal that allows a pressure value and pressure distribution to be externally determined. Here, the pressure sensor may be various pressure-sensing elements or pressure-sensing devices that may be implemented in multiple flat members in addition to multiple force sensing resistors (FSR) disposed at regular intervals in X and Y directions on a flat member, such as a film, a sheet, etc.

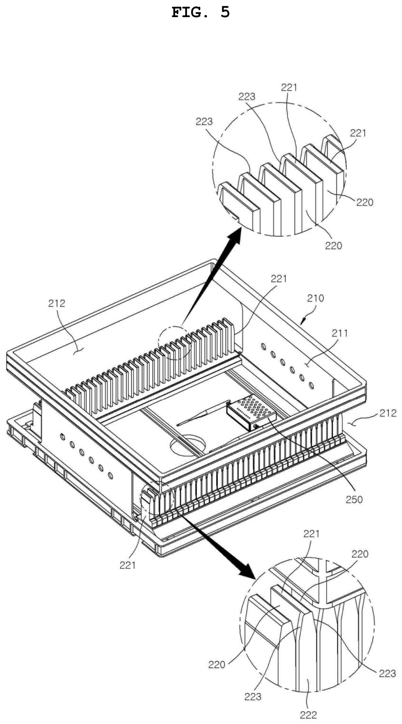

The communication unit 140 transmits the electrical signal output from the electronic pressure mapping film 120 as a wireless signal. The communication unit 140 may be, for example, a communication device for receiving the electrical signal from the electronic pressure mapping film 120 and transmits the electrical signal directly to an external signal processing device for processing the electrical signal to output a pressure value and pressure distribution, or alternatively, as another example, may be a communication device for transmitting the electrical signal to an external signal processing device via a router 250 (see FIG. 5) by communicating with the router 250 as in the present embodiment. The communication unit 140 may use various communication methods, such as Bluetooth, ultra-wideband (UWB), Zigbee, Wi-Fi, 3G, LTE, 5G, WIBRO, etc., to communicate with the external signal processing device or the router 250.

The communication unit 140 may be, for example, configured to directly convert the electrical signal of the electronic pressure mapping film 120 into the wireless signal and transmit the wireless signal, or as another example, may be configured to receive a transmission signal converted by a controller 130 or the like from the electrical signal of the electronic pressure mapping film 120 and transmit the transmission signal as a wireless signal. That is, the communication unit 140 may be configured to be solely responsible for transmitting the electrical signal of the electronic pressure mapping film 120 as the wireless signal, or the communication unit 140 may be configured to be operated by the controller 130 or the like.

The battery 150 provides power necessary for the operation of the electronic pressure mapping film 120 and the communication unit 140 and is charged by charging power supplied through a charging electrode 151 provided at a lower end of the cell body 110 so as to be reused through charging. The controller 130, which will be described below, may be implemented on a printed circuit board (PCB), and such a PCB may also include a charging circuit for charging the battery 150.

The master cell 100 for pressurized data acquisition according to the embodiment of the present invention may further include a housing 160, measuring electrodes 171 and 172, and a grip part 180.

The housing 160 is configured in a plate-like structure so as to be positioned above the electronic pressure mapping film 120 in the cell body 110, thereby allowing the communication unit 140 and the controller 130 for operation control to be accommodated therein and maintaining a compact structure together with the cell body 110. In addition, the housing 160 may be configured such that the battery 150 is accommodated therein as needed. Here, the communication unit 140 may be configured as a separate component from the controller 130 or as a portion of the controller 130, and the controller 130 may control the power supply to and operation of the electronic pressure mapping film 120 and the communication unit 140 in response to operation signals or control signals received from the outside.

The measuring electrodes 171 and 172 may be provided to protrude from both ends of the cell body 110, respectively, and are used for resistance measurement, and may be configured as a pair of a positive measuring electrode 171 and a negative measuring electrode 172, may have a protruding shape to be connected to an external resistance measurement device, and function as resistance measurement probes of such an external resistance measurement device. The measuring electrodes 171 and 172 are connected to resistors with known resistance values and connected to various types of resistance measuring devices to enable calibration based on the known resistance values when measuring resistance.

The grip parts 180 are provided on both upper sides of the cell body 110 to be gripped by grippers (not illustrated), respectively, and may have a flat structure advantageous for gripping. The grip parts 180 may provide a gripping positions when a large number of master cells 100 for pressurized data acquisition are loaded between the pressurization panels by the grippers. To ensure stable gripping, at least two of the grip parts 180 may be provided, and as in the present embodiment, may be provided in a "¬" shape with respect to corners at both sides of the cell body 110.

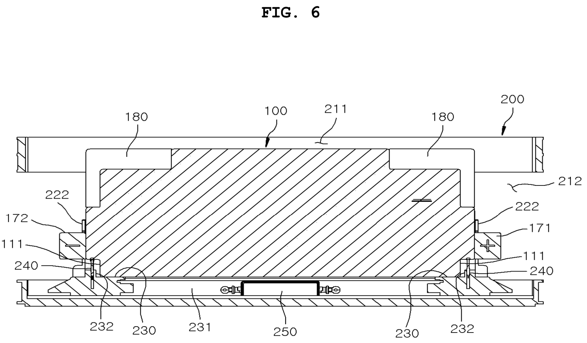

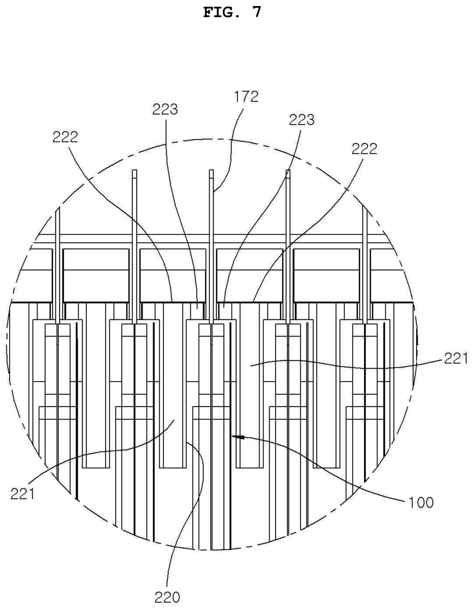

FIG. 5 is a perspective view a master cell tray according to the embodiment of the present invention, FIG. 6 is a front cross-sectional view illustrating the master cell for pressurized data acquisition mounted on the master cell tray according to the embodiment of the present invention, and FIG. 7 is a partial plan view illustrating the master cell for pressurized data acquisition mounted on the master cell tray according to the embodiment of the present invention.

Referring to FIGS. 5 to 7, a master cell tray 200 according to one embodiment of the present invention is a tray in which a plurality of master cells 100 for pressurized data acquisition according to the embodiment of the present invention are mounted in parallel and may include a tray body 210 and a slot 220.

The tray body 210 may be open upward, and to this end, an upper opening 211 may be formed at the top and thus open such that the master cell 100 for pressurized data acquisition may enter and exit through the top. In addition, the tray body 210 may be open laterally such that side openings 212 may be formed at both sides to check the master cell 100 for pressurized data acquisition accommodated therein.

A plurality of slots 220 are provided in parallel such that the master cell 100 for pressurized data acquisition is vertically mounted on an inner side of the tray body 210.

The slot 220 may be provided between a plurality of supports 221 disposed to be vertically spaced apart from each other on both sides of a bottom surface inside the tray body 210. By an anti-detachment portions 222 provided on an outer side of each support 221, the penetration of the measuring electrodes 171 and 172 protruding from both sides of the cell body 110 can be allowed while blocking the passage of the cell body 110. The measuring electrodes 171, 172 may be guided to be inserted between the anti-detachment portions 222 by entrance guide portions 223 provided on both upper sides of the anti-detachment portions 222 to be inclined downward. As illustrated in FIG. 7, the anti-detachment portion 222 has a "T" shaped flat structure together with the support 221 due to a structure that intersects the end of the support 221 in order to block the passage of the cell body 110 while allowing the penetration of the measuring electrodes 171 and 172, and thus, in a state in which the master cell 100 for pressurized data acquisition is positioned inside a gap 220 formed between the supports 221, only the measuring electrodes 171 and 172 may be formed to pass through a narrowed gap between the anti-detachment portions 222.

According to one embodiment of the present invention, the master cell tray 200 may further include a separation support 230 for supporting the upper separation of the cell body 110, the router 250 for providing the electrical signal of the electronic pressure mapping film 120 in the master cell 100 for pressurized data acquisition to the external signal processing device through communication, and a probe pin 240 for providing charging power to the battery 150 of the master cell 100 for pressurized data acquisition accommodated therein.

The separation support 230 may support both lower sides of the cell body 110 on the bottom surface within the tray body 210, thereby forming an accommodation space 231 between the cell body 110 and the bottom surface inside the tray body 210. The separation support 230 may be provided with an anti-detachment step 232 so as to be caught by a groove 111 formed to allow the charging electrode 151, which is directed downward for charging the battery 150, to be positioned inside the lower end of the cell body 110. Accordingly, the separation support 230 may support both lower sides of the cell body 110 to be spaced apart from the bottom surface of the tray body 210, thereby forming the accommodation space 231 for accommodating the router 250, and by the anti-detachment step 232 that may be caught on the grooves 111 formed in both lower sides of the cell body 110, the probe pin 240 may remain laterally connected to the charging electrode 151 of the cell body 110 without being detached.

The router 250 may be installed inside the accommodation space 231 and may provide the electrical signals of the electronic pressure mapping film 120 to the external signal processing device in a wireless communication manner through the communication with the communication unit 140. To this end, the router 250 may use various communication methods, such as Wi-Fi, 3G, LTE, 5G, WIBRO, etc., to mediate the communication between the communication unit 140 and the external signal processing device. The external signal processing device may process the electrical signal of the electronic pressure mapping film 120 according to a predetermined process and output the pressure force, flatness, parallelism, etc. of the pressurization panel through the electronic pressure mapping film 120 to a display device or a predetermined terminal.

The probe pins 240 may be provided in each slot 220 such that each charging electrode 151, which is provided on both lower sides of the cell body 110 for charging the battery 150, is supported in a connected state to receive charging power. Accordingly, the probe pins 240 may be disposed in two rows in the arrangement direction of the cell bodies 110 on the bottom surface of the tray body 210, thereby allowing the charging power to be supplied to the charging electrodes 151 respectively positioned on both lower sides of each cell body 110. The probe pins 240 may have a structure capable of vertical expansion and contraction within a limited range and may be elastically restored upward by an internal spring, thereby allowing stable contact with the charging electrodes 151 to be maintained and minimizing an impact applied to the charging electrodes 151. In addition, the probe pins 240 may distribute and supply the converted charging power to the charging electrodes 151, the charging power being supplied through a power cable pulled out from the tray body 210.

According to the master cell for pressurized data acquisition and the tray for accommodating the same, it is possible to enable the measurement of the flatness, parallelism, pressurizing force, and even resistance of a pressurization panel that pressurizes a pressurization target and enables the accurate and easy acquisition and provision of pressurized data for the pressurization panel.

In addition, according to the present invention, the above operations make it possible to enhance the reliability of various subsequent operations related to the pressurization process, such as inspection, measurement, monitoring, manufacturing, etc.

Although the present invention has been described above with reference to the accompanying drawings, various modifications may be made without departing from the technical spirit of the present invention. Accordingly, the scope of the present invention should not be limited to the above embodiments, but should be defined by the appended claims and the equivalents thereof.

**DESCRIPTION OF REFERENCE NUMERALS**

| | | | |
|---|---|---|---|
| 100: | master cell for pressurized data acquisition | | |
| 110: | cell body | | |
| 111: | groove | 120: | electronic pressure mapping film |
| 130: | controller | 140: | communication unit |
| 150: | battery | 151: | charging electrode |
| 160: | housing | 171, 172: | measuring electrodes |
| 180: | grip portion | 200: | master cell tray |
| 210: | tray body | 211: | upper opening |
| 212: | side opening | 220: | slot |
| 221: | support | 222: | anti-detachment portion |
| 223: | entrance guide portion | 230: | separation support |
| 231: | accommodation space | 232: | anti-detachment step |
| 240: | probe pin | 250: | router |

## Claims

1. A master cell for pressurized data acquisition, comprising:
a cell body inserted between pressurization panels on behalf of a pressurization target;
an electronic pressure mapping film which is installed flat on one side surface of the cell body to come into surface contact with the pressurization target and outputs distribution of a pressurizing force by the pressurization panel as an electrical signal;
a communication unit configured to transmit the electrical signal output from the electronic pressure mapping film as a wireless signal; and
a battery which is provided in the cell body and provides power necessary for the operation of the electronic pressure mapping film and the communication unit,
wherein the battery is charged by charging power supplied through charging electrodes provided in the cell body, and
further includes a pair of measuring electrodes provided to protrude from both ends of the cell body, respectively, connected to resistors with known resistance values for calibration, and used for resistance measurement.

2. The master cell of claim 1, further comprising a housing having a plate-like structure positioned above the electronic pressure mapping film in the cell body, allowing the communication unit and a controller for operation control to be accommodated therein.

3. The master cell of claim 1, further comprising grip portions provided to be gripped by grippers on both upper sides of the cell body.

4. A master cell tray on which a plurality of master cells for pressurized data acquisition according to any one of claims 1, 2, and 3 are mounted in parallel, the master cell tray comprising:
a tray body which is open upward; and
a plurality of slots provided in parallel inside the tray body such that the master cells for pressurized data acquisition are vertically mounted, respectively.

5. The master cell tray of claim 4, wherein the slot is provided between a plurality of supports disposed to be vertically spaced apart from each other on both sides of a bottom surface inside a tray body, allows measuring electrodes, which protrude from both sides of the cell body, to pass through by anti-detachment portions formed on outer sides of each of the supports while blocking passage of the cell body, and by entrance guide portions formed on both upper sides of the anti-detachment portions to be inclined downward, each of the measuring electrodes is guided to be inserted between the anti-detachment portions.

6. The master cell tray of claim 4, further comprising:
separation supports configured to support both lower sides of the cell body on the bottom surface inside the tray body, thereby forming an accommodation space between the cell body and the bottom surface; and
a router which is installed inside the accommodation space and transmits an electrical signal of the electronic pressure mapping film transmitted through communication with the communication unit to an external signal processing device.

7. The master cell tray of claim 6, wherein the separation support is provided with an anti-detachment step so as to be caught by a groove formed to allow the charging electrode, which is directed downward for charging the battery, to be positioned inside the lower end of the cell body.

8. The master cell tray of claim 4, further comprising a probe pin provided for each slot to provide charging power by connecting and supporting each of charging electrodes provided at both lower ends of the cell body for charging the battery.
